Europäisches Patentamt

European Patent Office

Office européen des brevets

(11) Veröffentlichungsnummer: **0 309 409**
A2

# (12) EUROPÄISCHE PATENTANMELDUNG

(21) Anmeldenummer: **88810637.4**

(22) Anmeldetag: **19.09.88**

(51) Int. Cl.⁴: **B 29 C 47/10**

(30) Priorität: **25.09.87 CH 3716/87**
**06.10.87 CH 3899/87**

(43) Veröffentlichungstag der Anmeldung:
**29.03.89 Patentblatt 89/13**

(84) Benannte Vertragsstaaten:
**CH DE ES FR GB IT LI**

(71) Anmelder: **CIBA-GEIGY AG**
**Klybeckstrasse 141**
**CH-4002 Basel (CH)**

(72) Erfinder: **Wagner, Daniel, Dr.**
**St. Albanring 229**
**CH-4052 Basel (CH)**

**Mechera, Karl, Dr.**
**Im Baumgarten 14**
**CH-4132 Muttenz (CH)**

(54) **Verfahren zum Einspeisen einer fliessfähigen Masse in den Materaleinzugsbereich einer Extrudierstrecke und Einspeisungskammer dafür.**

(57) In die Auffangszone eines mittels Schneckenvorrichtung (33) Extrudiergut zu einem Ausgabeende (20) fördernden Extruders (15) wird aus einer Breitschlitzdüse (36), die in einer auf der Oberwandung (29) des Extruders aufgesetzten Einspeisungskammer (30) enthalten ist, eine fließfähige Masse, insbesondere eine Schmelze eingespeist, die in Form eines Gießvorhanges (40) in das Extruderinnere fällt und von der Schneckenvorrichtung eingezogen wird. Der Gießvorhang erstreckt sich vorzugsweise quer zur Förderrichtung des Extruders und wird durch ein an die Einspeisungskammer angelegtes Vakuum (26,25,37) weitgehend bis vollständig entgast.

Fig. 2

EP 0 309 409 A2

**Beschreibung**

### Verfahren zum Einspeisen einer fließfähigen Masse in den Materialeinzugsbereich einer Extrudierstrecke und Einspeisungskammer dafür.

Die Erfindung betrifft ein Verfahren zum Einspeisen einer fließfähigen Masse in den Materialeinzugsbereich einer Extrudierstreckegegebener Breite, durch die zu extrudierendes Gut in Förderrichtung zum Ausstoßende der Strecke hin bewegt wird. Weiter betrifft die Erfindung eine Einspeisungskammer für das Einspeisen der fließfähigen Masse in den eine Schneckenvorrichtung enthaltenden Extruder, wobei die Einspeisungskammer oben auf dem Extruder vorzugsweise im Anfangsbereich der Extrudierstrecke aufgesetzt ist.

In der DE-OS 25 33 195 (The Japan Steel Works Ltd., Tokio und Dai Nippon Toryo Co. Ltd., Osaka, Japan) ist bereits ein Verfahren zum Einspeisen von hitzehärtbaren Harzen zusammen mit verschiedenen Zusatzen durch auf der Oberseite eines Extruders am Anfang der Extrudierstrecke angebrachte kammerartige, oben offene Rohrstutzen beschrieben, wobei das Material direkt durch die unten offenen Kammern direkt auf die Schnecken im Extruder gelangt. Auch ist es aus der DE-OS 1 954 214 (Pyton AG, Lugano, Schweiz) bekannt, durch solche Einspeisungskammern Schmelzen in den Anfangsbereich einer Extrudierstrecke einzubringen. Dabei ist das Ausgabeende des Extruders als Breitschlitzdüse ausgebildet.

Diese und andere bekannte Verfahren und bekannte Einspeisungskammern haben den Nachteil, daß nicht für die ausreichende Entfernung von in der fließfähigen Masse, insbesondere wenn es sich um eine Schmelze handelt, okkludierten oder gelösten Gasen, vor allem Luft, genugend wenn überhaupt Sorge getragen ist. Denn in den meisten Fällen sind die bekannten Einleitungskammern oben offen, wobei die obere Einspeisungsöffnung noch durch Schrägstellung der Seitenwände vergrößert werden kann. Dies ist z.B bei den Einfülltrichtern in die in der DE-OS 24 04 658 der Dai Nippon Toryo Co.Ltd. und auch bei der EP-PA 58 101 der CreusotLoire der Fall. Im erstgenannten Falle wurden auch ungesättigte Polyesterharzlösungen in den Trichter am Anfang der Extrudierstrecke eingespeist, im letzteren Falle jedoch vorzugsweise Sägemehl. In jedem Falle wird keine Entgasung des fliessfähigen Materials vor der Einspeisung in den Extruder vorgenommen.

Weitere Nachteile der bekannten Verfahren und Einspeisungsvorrichtungen treten insbesondere dann auf, wenn alle oder die überwiegende Menge der Komponenten in Pulverform zugegeben werden. Bei Eingabe von Komponenten in flüssigem, insbesondere in geschmolzenem Zustande ergeben sich Schwierigkeiten bei der Dosierung und, vor allem auch bei der Vermeidung oder Absorption und Okklusion von Luft und anderen z.B. beim Schmelzvorgang freigesetzten Gasen in der in den Extruder vorzugsweise bei Dosiertemperatur einzuspeisenden Schmelze.

Vorzugsweise dient das Verfahren nach der Erfindung zum Einspeisen einer fließfähigen Masse in den Materialeinzugsbereich einer Extrudierstrek-

ke bei der zur Herstellung von bei Raumtemperatur festen Schmelzmischungen, die ausgehartet Duroplaste bilden, und insbesondere zur Herstellung sogenannter Reaktiv-Schmelzkleber, wie sie in der CH-Patent anmeldung No. 3899/87-3 der Anmelderin vom 6. Oktober 1987 Case 37-16699/ + beschrieben ist. Dieses Verfahren zur Herstellung einer vorzugsweise bei Raumtemperatur festen, heisshärtbaren, bei Aushärten Duroplaste bildenden Mischung, z.B. eines Reaktiv-Schmelzklebers, umfasst (A) das Zubereiten einer ersten Vormischung durch direktes Einführen von (a) schmelzbarem Festharz, und mindestens einer der folgenden Komponenten: (b) Flüssigharz, (c) Flexibilisator, (d) Haftvermittler, (e) Weichmacher, von denen mindestens eine flüssig ist, in eine Mischzone, in der die Komponenten geschmolzen werden; (B) das Zubereiten einer zweiten Vormischung durch direktes Vermischen von hitzeaktivierbarem Härter und einem der folgenden: Thixotropiermittel, Härtungsbeschleuniger, elektrische Leitfähigkeit verleihenden Additiven und Füllstoffen; (C) Einleiten der Schmelze mit einer Temperatur unter der Härtungstemperatur des Harzes in eine Extrudierzone, (D) Eingeben der pulverförmigen zweiten Vormischung in die Extrudierzone stromab der Eingabe der Schmelze und in solcher Menge, dass der Gehalt an zweiter Vormischung im Endprodukt von 10 bis 50, vorzugsweise 20 bis 35 Gew.% beträgt, wobei Lufteinschlüsse in die Schmelze und in das extrudierte Gut vermieden werden. Eine Anlage zur Durchführung des obigen Verfahrens mit einer besonderen Extrudereinlasskammer für die Schmelze sind gleichfalls beschrieben.

Es ist nun die Aufgabe der vorliegenden Erfindung, das vorbeschriebene Verfahren der Anmelderin so zu verbessern, daß beim Einspeisen einer fließfähigen Masse, insbesondere einer solchen, die bei der Dosiertemperatur in Form einer Schmelze vorliegt, in eine Extrudierstrecke die Beimengung, insbesondere durch Absorption oder Okklusion, von Luft und anderen z.B. beim Schmelzvorgang freigesetzten Gasen weitgehend oder vollständig vermieden wird.

Ein weiteres Ziel der Erfindung besteht dabei darin, bei der obengenannten Vorsichtsmaßnahme gleichwohl die intime Durchmischung der Komponenten in der Extrudierzone nicht zu beeinträchtigen, sondern vielmehr diese Durchmischung so weit möglich noch zu verbessern.

Diese Aufgabe wird durch die im kennzeichnenden Teil des Patentanspruchs 1 beschriebenen Verfahrensschritte gelöst. Bevorzugte Ausführungsweisen des Verfahrens nach der Erfindung umfassen mindestens eines der in den Unteransprüchen 2 bis 15 beschriebenen Merkmale. Eine zur Durchführung dieses erfindungsgemäßen Verfahrens geeignete Einspeisungskammer in die Extrudierstrecke weist die im kennzeichnenden Teil des Anspruchs 16 aufgeführten Merkmale auf, bevorzugte Ausführungsformen dieser Kammer die Merkmale der kennzeichnenden Teile der Ansprüche 17 bis 21.

Für die Verwendung als Harzkomponenten in derfliessfähigen Masse, die einen Gießvorhang bei ihrer Einspeisung in eine Extrudierstrecke bilden muß, eignen sich besonders Epoxidharzverbindungen wie sie in Ullmanns Encykl. der technischen Chemie, 4. Aufl., Band 14 auf Seite 236 aufgeführt sind. Insbesondere eignen sich hierzu heisshärtbare Epoxidsysteme, die in der US-PS 3 641 195 und auch in der EP Veröffentl. Nr. 0150674 vor allem auf Seiten 2, 6, 7 und 8 beschrieben sind.Als Flexibilisatoren können die auf dem Gebiet der Epoxidharze bekannten Verbindungen eingesetzt werden, unter anderem die bei der Verarbeitung duroplastischer Kunststoffe üblichen Weichmacher.

Beispiele hierfür sind Acrylnitril-Butadien-Copolymere, Acrylnitril, Polyester und Polyäther. Haftvermittler sind allgemein in "Die Kunststoffe und ihre Eigenschaften" von Hans Domininghaus, 2. Aufl., VDI Verlag, D-4000 Dusseldorf, auf Seiten 642-643 beschrieben, wobei Silan-Haftvermittler bevorzugt sind. Beispiele für Weichmacher sind Phthalat- und Adipat-Weichmacher, Z.B. Benzylbutylphthalat. Beispiele für reaktive Verdunner sind Phenyl- oder Cresyl-Glycidyläther, Butandioldiglycidyläther und Hexahydrophthalsäure-Diglycidyläther.

Weitere Merkmale, Ziele und Vorteile der Einspeisungskammer nach der Erfindung ergeben sich aus der folgenden Beschreibung einer bevorzugten Ausführungsform derselben sowie einer diese Einspeisungskammer enthaltenden Anlage der Anmelderin im Zusammenhang mit der beigefügten Zeichnung, in welcher

Fig. 1 eine Anlage zur Durchführung des eingangs erwähnten Verfahrens der Anmelderin nach der Patentanmeldung Nr.

Fig. 2 eine bevorzugte Ausführungsform der auf einem Extruder montierten Einspeisungskammer nach der Erfindung, im Längsschnitt, und

Fig. 3 die gleiche Ausführungsform der Einspeisungskammer nach der Erfindung wie in Fig. 2, aber in teilweise aufgeschnittener Draufsicht zeigt.

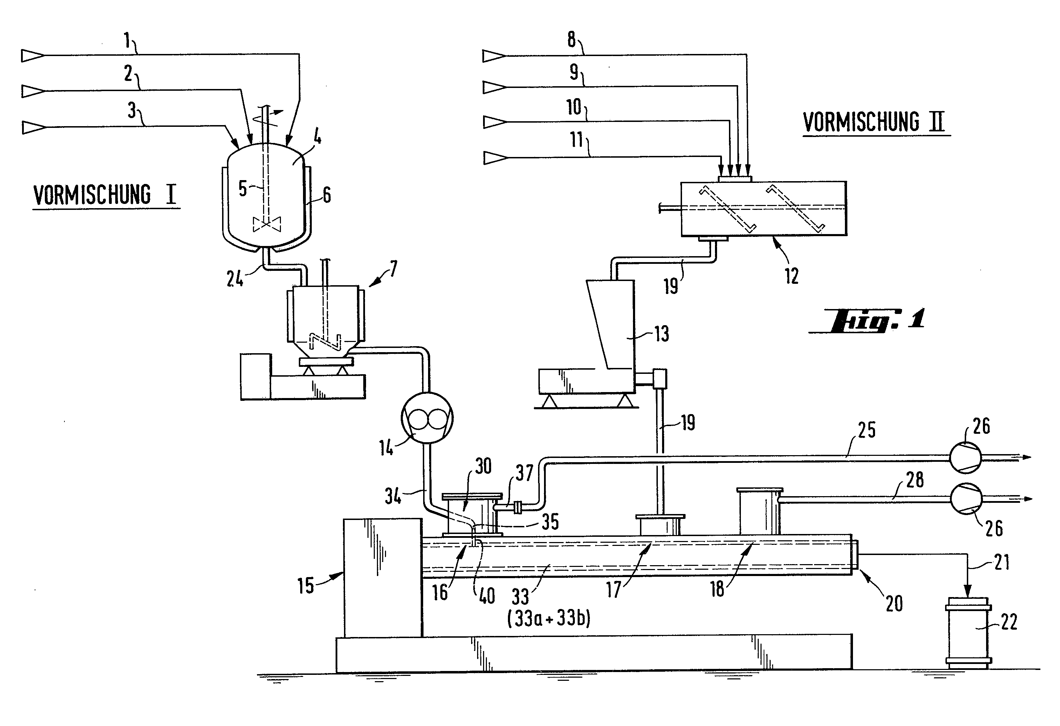

Die in Fig. 1 gezeigte Anlage der Anmelderin umfaßt einen ersten, in Fig. 1 links gezeigten Produktionszweig zur Zubereitung der weiter oben erwähnten ersten Vormischung und einen zweiten, rechten Zweig zur Zubereitung der vorerwähnten zweiten Vormischung. Der erste Produktionszweig umfaßt einen Rührkessel 4 mit den Zuleitungen 1 für Festharz, 2 fur Flüssigharz und 3 für mindestens ein festes, bei der Dosierungstemperatur schmelzbares oder ein flüssiges Additiv. Naturlich kann auch eine weitere Zuleitung für ein zweites Additiv vorgesehen sein, usw. Ist z.B. das durch eine erste Zuleitung 3 eingeführte Additiv flüssig, so kann durch eine zusätzliche Zuleitung (nicht gezeigt) ein weiteres bei Zimmertemperatur festes Additiv als Schmelze in den Kessel 4 eingegeben werden und entsprechend noch andere.

Der Kessel 4 ist mit einer Rührvorrichtung 5 und mit einer Beheizung 6 ausgerüstet. Die Beheizung muß so ausgelegt sein, daß der Kesselinhalt auf Temperaturen von 90 bis 110°C oder auch noch höher gebracht und auf solcher Schmelztemperatur gehalten werden kann, bis im Kessel eine Schmelze hinreichender Fließfähigkeit vorliegt.

Weiter ist der Kessel 4 mit einer üblichen Entgasungseinrichtung versehen. Aus dem Kessel 4 gelangt die gut fließfähige Schmelze über eine beheizbare, gasdicht geschlossene Leitung 24 in die Dosiereinrichtung 7 des ersten Zweiges, vorzugsweise eine Differentialdosierwaage,und von dieser durch eine beheizbare, gasdicht geschlossene Leitung 34, in der erforderlichenfalls eine Zahnradpumpe als Schmelzentransporteinrichtung 14 vorgesehen sein kann, in den weiter unten näher beschriebenen Extruder 15.

Im anderen Produktionszweig befindet sich ein Pulvermischgerät 12, z.B. ein einfacher Pflugscharmischer, in den Zuleitungen 8 für den festen, bei Raumtemperatur nicht aktivierten Härter, 9 für Hartungsbeschleuniger, 10 für Thixotropiermittel oder ein anderes festes Additiv und 11 für Füllstoffe einmünden. Dem Pulvermischer 12 ist eine zweite Dosierwaageneinrichtung 13 nachgeschaltet, in die die Pulvermischung aus dem Mischgerät 12 über eine Rohrleitung 19 gelangt.

Beide Produktionszweige munden in den gemeinsamen Extruder 15 ein. Dieser ist vorteilhafterweise ein Doppel schneckenextruder mit einer ersten, in Förderrichtung stromauf gelegenen Einzugszone 16 und an diese anschließend einer zweiten Einzugszone 17 in einem mittleren Bereich des Förderweges für das Gut, also der Extrudierstrecke durch den Extruder.

Auch weist der Extruder mindestens eine Entgasungszone 18 und ein Auslaßende 20 auf. Die Schneckengeometrie ist vorzugsweise so gewählt, daß beim Anlegen von Vakuum über die Saugleitung 28 an das Extruderinnere vorzugsweise in der Entgasungszone 18 mit Hilfe einer der Vakuumpumpen 26 die Abdichtung des Extruderinneren durch das sich am Extruderauslaßende 20 befindliche Endprodukt des Verfahrens gewährleistet ist.

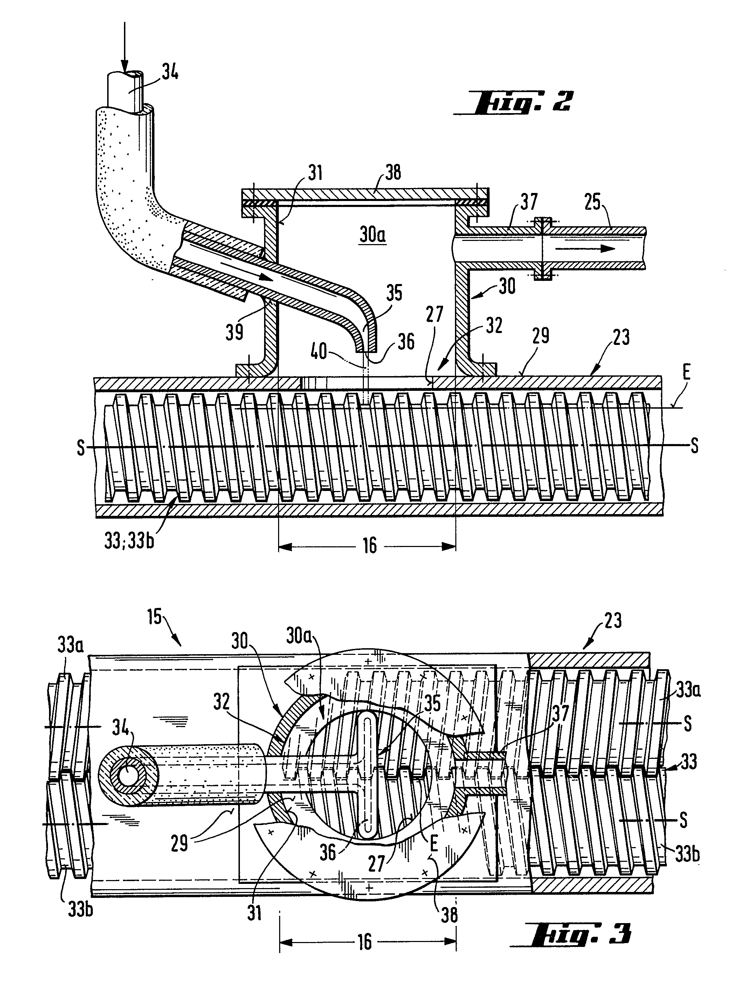

In der ersten, stromauf gelegenen Einzugszone 16 des Extruders befindet sich auf der Extruderoberseite 29 gasdicht montiert eine Einlaßkammer 30, deren Aufbau an Hand der Figuren 2 und 3 im folgenden naher beschrieben wird, und deren Kammerinneres 30a über eine gasdichte Leitung 25 an die zweite Vakuumpumpe 26 angeschlossen ist.

Die in Figuren 2 und 3 dargestellte Einlaß- oder Einspeisungskammer 30 ist gasdicht über der ersten Einzugszone 16 auf der Oberwandung 29 des Extrudergehäuses 23 montiert. Die Wandungen der Kammer 30 umfassen Kammerseitenwände 31 und eine vorzugsweise als oder mit Deckel 38 ausgebildete obere Abschlußwandung. Der Deckel 38 ist in der Abschlußwandung oder auf dem oberen Rand der Kammerseitenwandung 31 gasdicht ein- bzw. aufgesetzt, z.B. mit zwischengelegten Dichtungen verschraubt. An ihrem unteren Ende 32 ist die Kammer 30 offen oder als Durchlaß ausgebildet, der nach unten in eine Einlaßöffnung 27 öffnet, die in der Oberwandung 29 des Extrudergehäuses 23 in der Einzugszone 16 mit dem Durchlaß fluchtend vorgesehen ist. In einer der Kammerseitenwände 31 ist eine Durchtrittsöffnung 39 vorgesehen, in der die Leitung 34 für eine Schmelze oder dergl. fließfähige Masse, mit ihrem als Einlaßrohr ausgebildeten Ende gasdicht eingebaut ist und im Kammerinneren 30a in einer Breitschlitzdüse 35 mündet. Der Düsenauslaß wird durch einen Längsschlitz 36 gebildet, der sich vorzugsweise quer zur Forderrichtung des Extruders 30, d.h. mit seiner Schlitzlängsachse quer zur Schneckenlängsachse S der Doppelschnecke 33 erstreckt.

Die Länge des Düsenschlitzes beträgt dabei vorzugsweise 30 bis 70 und optimal um 40 mm, während die Breite des Schlitzes 36 entsprechend etwa 1 bis 5 mm, vorzugsweise um 2 bis 3 mm beträgt. Aus dem Längsschlitz 36 tritt die Schmelze in Form eines dünnen Gießvorhanges aus und fällt durch den Durchlaß am unteren Ende 32 der Kammer 30 und die mit ihm fluchtende Einlaßöffnung 27 in der Extrudergehäuseoberwandung 29 hindurch auf die Doppelschnecke 33 und wird von den beiden vorzugsweise gleichsinnig drehenden Schnecken 33a,33b erfaßt, deren Umfangsprofile ineinandergreifen. Die Fallhöhe des Gießvorhangs 40 aus dem Schlitz 36 bis zur Einzugsebene zwischen den beiden Schnecken beträgt vorzugsweise 25 bis 35 mm, und am besten nicht mehr als 40 mm. Je nach den Dimensionen der Düse 35 hat der Gießvorhang 40 dabei eine Breite von etwa 30 bis 60, vorzugsweise von 40 bis 60 mm und eine Dicke von 0,5 bis 4, und optimal von 1 bis 2 mm. Die gewünschte Fallhöhe, die auf die Beschaffenheit des Gießvorhanges 40 abgestellt werden kann, kann durch entsprechende Verstellvorrichtungen (nicht gezeigt) in an sich bekannter Art auf das gewünschte Niveau über der Einzugsebene im Extruderinneren eingestellt werden. Neben einer solchen Verstelleinrichtung z.B. in der Kammerseitenwand 31 an der Durchtrittsöffnung 39 für die Einlaßleitung 34, kann in einer der Kammerseitenwandungen 31 auch ein Anschlußstutzen 37 zum Anschließen der Saugleitung 25 einer der Vakuumpumpen 26 vorgesehen sein.

Als vorhangbildende Mittel können anstelle einer Breitschlitzdüse auch andere, z.B. wehrartige Anordnungen, an deren Ueberlaufkante sich ein Giessvorhang bildet, eingesetzt werden. Insbesondere eignet sich eine Rinne zur Bildung des Vorhangs, deren eine Längskante als Ueberlauf ausgebildet ist. Weiterhin können die vorhangbildenden Mittel siebartig (Giesskannenprinzip) ausgebildet sein und einen faden- oder tröpfchenförmigen Vorhang einreihig oder mehrreihig ausbilden. Wesentlich ist, dass in der evakuierten Zone das Verhältnis Oberfläche zu Volumen der eingespeisten Masse möglichst gross ist, damit Gaseinschlüsse möglichst leicht und vollständig entweichen können. Für Massen höherer Viskosität sind Breitschlitz- oder Siebdüsen zu bevorzugen, durch welche die Massen mit einem gewissen Ueberdruck ausgepresst werden können.

Es können auch zwei oder mehr der vorhangbildenden Mittel, insbesondere Breitschlitzdüsen, parallel zueinander eingesetzt werden. Damit kann bei Beibehaltung beliebig dünner Vorhänge die eindosierte Menge der Masse beliebig erhöht werden.

Die praktische Durchführung des Verfahrens nach der Erfindung wird nun an Hand einiger Ausfuhrungsbeispiele erläutert; dabei wird im allgemeinen wie folgt vorgegangen (Temperaturen sind in °C angegeben):

A. Zubereitung eines Schmelzen-Master Batch:

Flüssigharz und Flüssigadditivkomponenten werden im Kessel 4 bei etwa 90 bis 100° vorgelegt. Die festen Komponenten, vor allem Festharz und gegebenenfalls feste, schmelzbare Additive werden dann unter stetem Rühren eingegeben. Die geschmolzene Mischung wird dann bei 90 bis 110° homogenisiert und dabei bei einem reduzierten Druck von 40 mbar entgast.

B. Erzeugung des Gießvorhanges:

Der Master Batch wird in geschmolzenem Zustande bei 60 bis 70° Dosiertemperatur mit Hilfe der Differentialdosierwaage 7 und der Zahnradpumpe 14 durch die Leitung 34 in die bis auf einen Druck von 30 mbar evakuierte, über der ersten Einzugszone 16 angebrachte Einspeisungskammer 30 dosiert und fällt aus der Breitschlitzdüse 35 durch den Durchlaß im unteren Kammerende 32 und die mit diesem fluchtende Einlaßöffnung 27 in den Extruder 15, in welchem der Gießvorhang 40 von den beiden Schnecken 33a und 33b erfaßt und in Richtung zum Extruderauslaß 20 hin befördert wird. Fließfähige Massen, die praktisch vollständig entgasbare Gießvorhänge bei Einhalten der bevorzugten Dimensionen im Verfahren nach der Erfindung und bei Verwendung der erfindungsgemäßen Einspeisungsdüse in den Extruder bilden, werden zum Beispiel aus den folgenden Komponenten nach der vorangehend beschriebenen Arbeitsweise erhalten:

Beispiel 1

Vormischung aus:
50 Gew.teilen eines festen Diglycidyläthers auf Bisphenol-A-Basis mit einem Epoxidgehalt von 1,6 Äquivalent/kg
15 Gew.teilen eines Addukts aus carboxyl-terminiertem Acrylnitril/Butadien-Copolymer mit einem . Acrylnitrilgehalt von 26 Gew.% und einer Säurezahl von 32 mg KOH/g und einem flüssigen Diglycidyläther auf Bisphenol-A-Basis mit einem Epoxidgehalt von 5,3 Äcuivalent /kg, im Gewichtsverhältnis 7:8, (als Flexibilisator).

Beispiel 2

Vormischung aus:
50 Gew.teilen eines festen Diglycidyläthers auf Bisphenol-A-Basis mit einem Epoxidgehalt von 1,6 Äquivalent/kg
10 Gew.teilen eines flüssigen Diglycidyläthers auf Bisphenol-A-Basis mit einem Epoxidgehalt von 5,3 Aequivalent/kg
10 Gew.teilen des im Beispiel 1 verwendeten Flexibilisators.

### Beispiel 3

Vormischung aus:
40 Gew.teilen eines festen Diglycidyläthers auf Bisphenol-A-Basis mit einem Epoxidgehalt von 1,6 Aequivalent/kg
14 Gew.teilen eines flüssigen Diglycidyläthers auf Bisphenol-A-Basis mit einem Epoxidgehalt von 5,3 Aequivalent/kg
10 Gew.teilen des im Beispiel 1 verwendeten Flexibilisators.

### Beispiel 4

Vormischung aus:
45 Gew.teilen eines festen Diglycidyläthers auf Bisphenol-A-Basis mit einem Epoxidgehalt von 2,6 Aequivalent/kg
10 Gew.teilen eines flüssigen Diglycidyläthers auf Bisphenol-F-Basis mit einem Epoxidgehalt von 5,9 Aequivalent/kg
15 Gew.teilen eines Flexibilisators bestehend aus dem Addukt von linearem Neopentylglycol-Sebacinsäure-Polyester mit endständigen Carbxylgruppen (Aequivalentgewicht 700) und Bisphenol A-diglycidyläther im Molverhältnis 1:2.

### Beispiel 5

Vormischung aus:
55 Gew.teilen eines festen Diglycidyläthers auf Bisphenol-A-Basis mit einem Epoxidgehalt von 1,1 Aequivalent/kg
10 Gew.teilen eines flüssigen Diglycidyläthers auf Bisphenol-A-Basis mit einem Epoxidgehalt von 5,3 Aequivalent/kg
5 Gew.teilen eines Flexibilisators bestehend aus epoxidiertem Polypropylenglykol vom Molgewicht 1000 und einem Epoxidgehalt von 1,8 Aequivalent/kg.

Durch die Ausbildung eines Gießvorganges im Verfahren nach der Erfindung, insbesondere eines solchen der weiter oben genannten Dimensionen und Fallhöhe, und vor allem auch bei Verwendung der Einspeisungskammer nach der Erfindung auf dem Extruder wird eine weitgehende bis vollständige Entgasung der den Vorhang bildenden fließfähigen Masse bzw. Schmelze bewirkt, wodurch die Entgasung in der in Fließrichtung stromab gelegenen, ebenfalls an eine Vakuumpumpe angeschlossenen Extruderzone mindestens ein geringeres Absaugen und gesamthaft eine wesentlich wirkungsvollere Entgasung erlaubt; insbesondere ist dies der Fall, wenn die nach dem Auslaßende hin durch den Extruder bewegte Masse durch weitere Zusätze eine stärker pastenförmige Konsistenz aufweist. Es ist in diesem Falle besonders vorteilhaft, daß die zuerst in den Extruder als Gießvorhang eingeführte Schmelze nahezu oder praktisch vollständig entgast ist, so daß die zusätzliche Entgasung nach dem Ausstoßende des Extruders hin vor allem dazu dient, Luft, die vermischt mit den von der Einspeisungskammer weiter stromab zugesetzten, meistens pulverförmigen Komponenten eingebracht wird, aus der Knetmasse im Extruder zu entfernen.

### Patentansprüche

1. Verfahren zum Einspeisen einer fließfähigen Masse in den Materialeinzugsbereich einer Extrudierstrecke gegebener Breite, durch die zu extrudierendes Material in Förderrichtung zum Ausstoßende der Strecke bewegt wird, vorzugsweise in deren Anfangsbereich, dadurch gekennzeichnet, dass die fliessfähige Masse in die Extrudierstrecke in Form eines herabfallenden, sich vorzugsweise schräg oder quer zur Förderrichtung erstreckenden, in seiner Breite derjenigen der Extrudierstrecke angepassten Vorhanges einfällt.

2. Verfahren nach Anspruch 1, dadurch gekennzeichnet, daß die fließfähige Masse aus einer zur Herstellung einer heißhärtbaren, schmelzbaren Mischung, vorzugsweise einer bei Raumtemperatur festen, zur Bildung von Duroplast befähigten Mischung, insbesondere eines Reaktiv-Schmelzklebers dienenden flüssigen oder durch Erwärmen schmelzbaren Vormischung von bei Einspeisetemperatur vorzugsweise newtonischem Fließverhalten besteht.

3. Verfahren nach Anspruch 1 oder 2, dadurch gekennzeichnet, daß die Vormischung eine Mischung bestehend aus

(a) bei Raumtemperatur fester, vorzugsweise pulverförmiger, mittels festem, bei Raumtemperatur nicht aktivem Härtungsmittel bei Erhitzen auf eine bestimmte Härtungstemperatur unter Duroplastbildung aushärtbarer und in einem sich von etwas unterhalb bis oberhalb der Härtungstemperatur erstreckenden Schmelztemperaturbereich unzersetzt schmelzender Festharzkomponente, mit deren Schmelze

(b) mindestens eine nicht mit der Festharzkomponente (a) reagierende, vorzugsweise flüssige Additivkomponente innig vermischt wurde, darstellt,

4. Verfahren nach Anspruch 3, dadurch gekennzeichnet, daß die Additivkomponente (b) aus mindestens einem der folgenden Additive besteht, von denen in der Additivkomponente mindestens eines bei Raumtemperatur flüssig ist und jedes feste solcher Additive in dem oben genannten Temperaturbereich, in welchem die Festharzkomponente unzersetzt schmelzbar ist, ebenfalls schmelzbar ist:

(i) bei Raumtemperatur flüssige, unter denselben Bedingungen wie die vorgenannte Festharzkomponente aushartbare, mit der letzteren duroplastbildende Flüssigharzkomponenten;

(ii) die Zähigkeit und Schlagfestigkeit eines aus dem Endprodukt durch Erhitzen gebildeten, vollständig ausgehärteten Produkts erhöhende Flexibilisierungskomponenten;

(iii) Haftvermittlerkomponenten;

(iv) Weichmacherkomponenten.

5. Verfahren nach Anspruch 3 oder 4, dadurch gekennzeichnet, daß die Festharzkomponente aus mindestens einem Epoxidharz besteht.

6. Verfahren nach Anspruch 3, dadurch gekennzeichnet, daß die als Schmelze vorliegende Vormischung bei Temperaturen unterhalb der Härtungstemperatur gießfähig ist.

7. Verfahren nach Anspruch 6, dadurch gekennzeichnet, daß die Vormischung im gießfähigen Zustande mittelviskos ist, wobei das Mengenverhältnis der Komponenten (a) und (b) zu einander vorzugsweise so festgelegt ist, daß bei der Dosiertemperatur die Viskosität im Bereich von 5000 bis 50 000 mPa.s, vorzugsweise bei 15 000 bis 20 000 mPa.s liegt.

8. Verfahren nach Anspruch 3, dadurch gekennzeichnet, daß die Temperatur der Mischung bei Einspeisen in die Extrudierzone bei 60 bis 80°, vorzugsweise um 70°C gehalten wird.

9. Verfahren nach einem der Ansprüche 2 bis 8, dadurch gekennzeichnet, daß die Vormischung eine Viskosität von etwa 15 000 bis 20 000 mPa.s aufweist.

10. Verfahren nach einem der Ansprüche 2 bis 9, dadurch gekennzeichnet, daß die Vormischung bei Raumtemperatur nicht für sich reaktiv ist.

11. Verfahren nach einem der vorangehenden Ansprüche, dadurch gekennzeichnet, daß in der unmittelbaren Umgebung des Vorhanges (40) ein Unterdruck erzeugt wird.

12. Verfahren nach einem der vorangehenden Ansprüche, dadurch gekennzeichnet, dass der Vorhang eine Dicke von 0,5 bis 4 mm aufweist.

13. Verfahren nach einem der vorangehenden Ansprüche, dadurch gekennzeichnet, daß die Fallhöhe des Vorhanges (40) bis zu seinem Auftreffniveau in der Extrudierstrecke bis 40 mm, vorzugsweise 25 bis 35 mm beträgt.

14. Verfahren nach einem der vorangehenden Ansprüche, dadurch gekennzeichnet, daß der Vorhang (40) in der Extrudierstrecke unter einem rechten Winkel zur Förderrichtung einfällt.

15. Verfahren nach Anspruch 11, dadurch gekennzeichnet, daß der in der Umgebung des Vorhanges (40) erzeugte Unterdruck von 5 bis 30 mbar, vorzugsweise um 20 mbar beträgt.

16. Extruder mit mindestens einer Misch- und Transportschnekke und mindestens einer Oeffnung zur Eingabe einer flüssigen oder pastösenen Masse, dadurch gekennzeichnet, dass die Eingabeöffnung durch eine haubenförmige Kammer (30) gasdicht abgedeckt ist, dass eine Zuführleitung für die flüssige oder pastöse Masse gasdicht durch die Kammerwand geführt ist, dass die Kammer und/oder das Extrudergehäuse mit einem Anschluss für eine Unterdruckquelle ausgestattet ist, und dass innerhalb der Kammer Mittel vorgesehen sind, welche an die Zuführleitung angeschlossen sind und aus der eingespeisten Masse einen frei durch die Eingabeöffnung auf die Schnekke(n) fallenden Vorhang bilden.

17. Extruder nach Anspruch 16, dadurch gekennzeichnet, dass die vorhangbildenden Mittel so angeordnet sind, dass der Vorhang schräg oder quer zur Transportrichtung der Schnecke(n) auf diese auffliesst.

18. Extruder nach Anspruch 16 oder 17, dadurch gekennzeichnet, dass die vorhangbildenden Mittel durch eine Breitschlitzdüse gebildet sind, deren Schlitz (36) sich vorzugsweise schräg oder quer zur Förderrichtung der Schnecke(n) erstreckt.

19. Einspeisungskammer nach einem der Ansprüche 16 bis 18, dadurch gekennzeichnet, dass die Kammer (30) mit einer vorzugsweise thermostatisch regelbaren Heizung ausgestattet ist.

20. Extruder nach einem der Ansprüche 16 bis 19, dadurch gekennzeichnet, dass der Auslass der vorhangbildenden Mittel, insbesondere der Schlitz (36) der Breitschlitzdüse im Abstand von ca. 20 bis 40 mm von der/den Schnecke(n) angeordnet ist.

21. Extruder nach einem der Ansprüche 16 bis 20 mit mindestens zwei parallelen Misch- und Förderschnecken, dadurch gekennzeichnet, dass der Auslass der vorhangbildenden Mittel, insbesondere der Schlitz der Breitschlitzdüse die beiden äusseren Schnecken zumindest teilweise übergreift.

Fig. 1

**Fig. 2**

**Fig. 3**